# FASCICULE DE BREVET EUROPEEN

(11) **EP 0 780 617 B1**
(45) Date de publication et mention de la délivrance du brevet: **27.02.2002**
(21) Numéro de dépôt: 96420358.2
(22) Date de dépôt: 16.12.1996
(51) Int. Cl.: F16L 15/04

(54) **Joint fileté pour tubes métalliques avec revêtement intérieur**
Schraubverbindung für innenbeschichtete Metallrohre
Screw connection for internally coated metal pipes

(30) Priorité: 22.12.1995 FR 9515412
(43) Date de publication de la demande: 25.06.1997
(73) Titulaire: VALLOUREC MANNESMANN OIL & GAS FRANCE, 59620 Aulnoye-Aymeries (FR)
(72) Inventeur: Noel, Thierry, 59990 Sebourg (FR)
(74) Mandataire: Desolneux, Jean-Paul Charles

(56) Documents cités:
- EP-A- 0 094 509
- EP-A- 0 488 912
- DE-A- 1 947 306
- US-A- 3 100 656
- US-A- 4 875 713
- US-A- 5 236 230

## Description

L'invention concerne de façon générale l'utilisation de couches ou revêtements sur des tubes et joints filetés pour tubes pour notamment les protéger contre la corrosion ou améliorer les conditions de circulation des fluides à l'intérieur de ceux-ci et concerne les tubes et joints filetés pour tubes métalliques munis d'un tel revêtement ou couche intérieur. De tels tubes et joints filetés correspondants sont utilisés pour l'exploitation des gisements de pétrole et de gaz, en particulier pour les puits dans lesquels on effectue des injections d'eau. L'invention concerne notamment de façon la plus générale tout tube et joint fileté qui lui est associé soumis du fait des conditions d'utilisation à une corrosion sévère au contact du fluide circulant. Tel est en particulier et de façon non limitative le cas des tubes et joints filetés utilisés pour faire circuler de l'eau comme par exemple dans les puits pétroliers cités ci-dessus ou les puits pour la géothermie, du fait de la composition et de la température de l'eau qui est en contact avec les tubes.

Il est connu et l'on sait protéger contre la corrosion la paroi intérieure de tubes ainsi que les composants des joints associés à ces tubes par une couche mince et adhérente d'un revêtement plastique, tel qu'une résine à base par exemple d'un polyépoxyde. Un tel revêtement a une excellente adhérence sur l'acier et une très bonne tenue à la corrosion. Indépendemment de ces problèmes de corrosion, on met aussi en oeuvre de tels revêtements sur les tubes et les composants des joints associés à ces tubes pour diminuer les pertes de charge et en particulier diminuer la rugosité de la surface de la paroi intérieure des tubes et des composants des joints et éliminer au maximum les turbulences pouvant se créer sur les parois intérieures des tubes et joints lors de la circulation des fluides.

Mais, au niveau d'un joint, entre, par exemple, la surface annulaire d'extrémité mâle d'un tronçon de tube et une surface annulaire formant butée du composant femelle du joint, on constate, lors du vissage du joint que la pression de serrage tend à provoquer au voisinage immédiat de la zone de contact une fissuration du revêtement protecteur et son éclatement. Il en résulte un écaillage et une corrosion localisée très importante du métal sous-jacent ainsi mis à nu, ou dans le cas où les revêtements sont utilisés pour améliorer la qualité de surface des parois en contact avec le fluide circulant des perturbations dans l'écoulement du fluide.

La corrosion, même si elle ne cause pas des fuites immédiates empêche la réutilisation sans réparation des composants du joint après dévissage. Elle peut aller jusqu'à la destruction des zones de butée et des portées d'étanchéité des joints.

Différentes solutions, permettant d'empêcher cette corrosion localisée, ont été proposées. Elles font appel à des anneaux d'étanchéité en élastomères ou en certaines matières plastiques.

Certains anneaux d'étanchéité tels que ceux réalisés en polytétrafluoréthylène (PTFE) présentent les avantages combinés d'une bonne tenue mécanique et d'une excellente résistance à la corrosion et d'une bonne compatibilité avec les revêtements plastiques utilisés pour les tubes métalliques et leurs moyens d'assemblage. Les anneaux utilisés peuvent être renforcés par des fibres de verre ou de carbone.

Plusieurs exemples décrivent l'utilisation de tels anneaux.

Ainsi le brevet US 3,100,656 décrit un assemblage du type intégral dans lequel l'extrémité mâle filetée d'un tronçon de tube est assemblée par vissage dans un logement femelle d'un autre tronçon. Les parois intérieures des tubes et des composants du joint sont revêtues d'une couche d'une résine phénolique telle que du phénol formaldéhyde de 0,002 à 0,006 inch (0,05 à 0,15 mm).

Un anneau d'étanchéité à base de polytétrafluoréthylène est engagé en partie dans un logement annulaire de la paroi femelle en appui contre un épaulement de celle-ci. Cet anneau a une section en I telle que sa zone élargie extérieure s'engage dans le logement tandis que l'extrémité de l'élément mâle en fin de vissage vient serrer un bord latéral de l'anneau contre l'épaulement. Le degré de serrage est limité par des butées.

Le brevet US 4,875,713 décrit un autre mode d'assemblage de deux tronçons de tubes. On fait appel à un manchon permettant l'assemblage bout à bout des extrémités mâles de deux tronçons de tubes. On protège de la corrosion la paroi interne du tube par un revêtement plastique constitué par une couche de résine phénolique ou époxyphénolique ou encore par des époxypolyamides. L'anneau est ici monté au milieu du manchon dans une double gorge. Il s'agit d'un anneau en PTFE renforcé par 5 % de fibres de verre et 5 % de fibres de carbone ; il a une forme en U renversé les deux branches du U étant engagées dans deux gorges parallèles. Les deux extrémités frontales des éléments mâles viennent recouvrir partiellement le sommet de chaque branche bloquant ainsi le joint dans son logement. Des épaulements de butée aux extrémités du manchon contrôlent le degré de vissage de chaque élément.

Le brevet US 5,236,230 décrit un montage analogue à celui du brevet US 4,875,713. On utilise cependant un anneau en PTFE dont la section est sensiblement rectangulaire et dont la hauteur radiale est d'environ 1,5 fois la largeur mesurée parallèlement à l'axe.

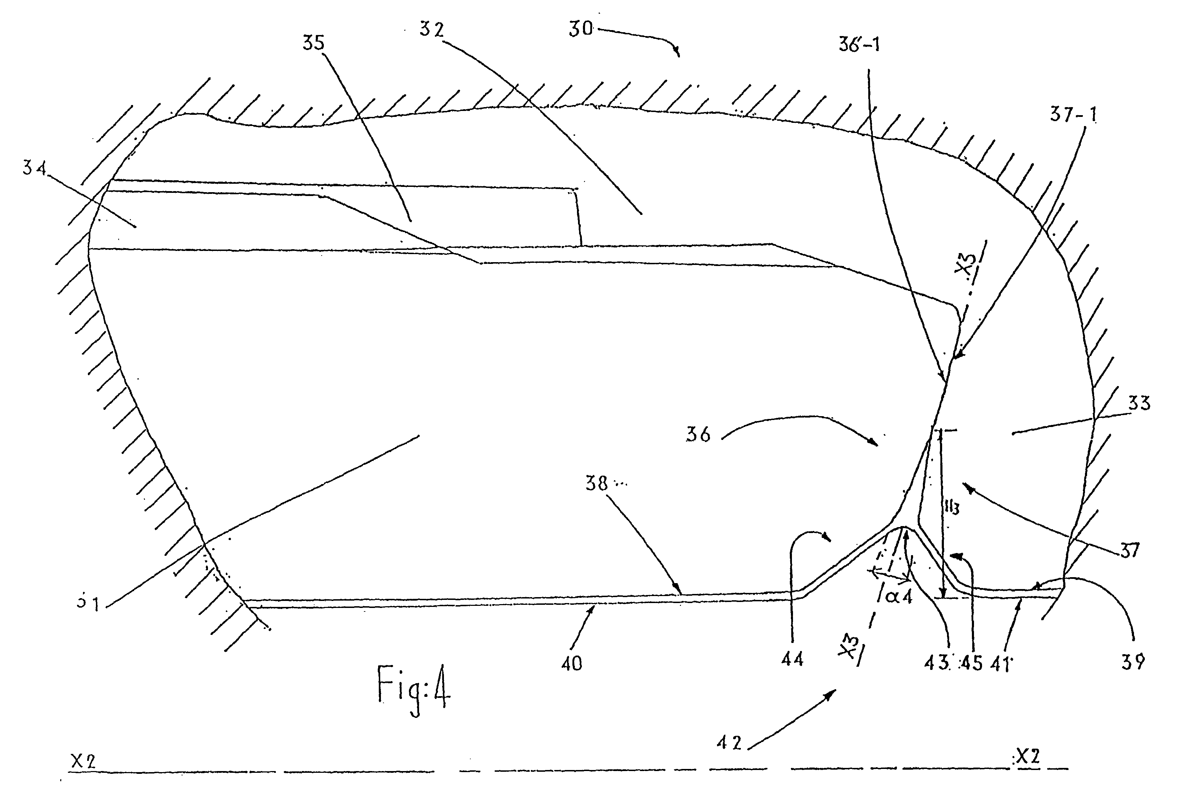

Comme le montre les figures 4 A et 4 B, lorsque les extrémités frontales mâles opposées sont serrées contre l'anneau sa section initialement rectangulaire est déformée en T et sa surface intérieure définit une section de passage égale à la section de passage des tubes, ce qui évite toute perturbation dans l'écoulement du fluide.

Le serrage est contrôlé par des épaulements d'arrêt. Aucune indication n'est donnée sur les risques de fissuration du revêtement aux angles droits, ou presque, représentés à la fig. 4 B.

Bien que ces différentes méthodes de protection de la zone de jonction des joints contre la corrosion aient des avantages certains, elles présentent toutes l'inconvénient d'utiliser des anneaux en élastomère ou plastomère qui présentent par eux-mêmes de réels inconvénients. Ces anneaux doivent, en général, être mis en place avec précision pour qu'ils viennent en appui correctement contre les surfaces d'étanchéité ; ils doivent aussi à chaque dévissage - revissage être soigneusement contrôlés et, le plus souvent, remplacés pour cause de vieillissement ou de déformation plastique. Dans le cas des anneaux relativement rigides tels que ceux en PTFE ils peuvent être sectionnés s'ils sont mal placés et ils peuvent éventuellement.aussi provoquer des fissures du revêtement plastique beaucoup plus tendre. Les anneaux peuvent aussi être expulsés de leur logement et se retrouver à l'intérieur du tube ou bien encore être arrachés ou détériorés lors du contrôle intérieur des tubes. On remarque aussi que, sur chantier d'exploitation, ces anneaux nécessitent des manipulations supplémentaires qui doivent être exécutées avec précision.

On a cherché de façon générale à améliorer la tenue des couches ou revêtements déposés sur les parois intérieures des tubes au niveau de la jonction des tubes sans faire appel à des anneaux, que ces couches soient utilisées pour la protection contre la corrosion ou la diminution de pertes de charge dans les tubes ou tout autre usage.

On a recherché de façon générale le moyen d'éviter l'utilisation d'anneaux d'étanchéité en élastomères ou plastomères tels que le PTFE. On a aussi recherché la possibilité d'effectuer un nombre important de dévissages - revissages des jonctions de tubes ou tronçons de tubes métalliques revêtus d'une couche plastique, et ne comportant pas d'anneaux, sans provoquer l'écaillage de cette couche dans la zone de liaison étanche entre l'extrémité d'un tube et un autre composant des joints, cet écaillage entraînant une corrosion rapide du métal sous-jacent.

On a cherché aussi à supprimer les anneaux d'étanchéité aussi bien dans le cas d'une liaison entre extrémités mâles de deux tronçons de tubes réalisée par manchon comportant deux logements femelles, que dans le cas d'une liaison directe dite «intégrale» entre l'extrémité mâle d'un tronçon de tube et l'extrémité femelle du suivant.

La demande de brevet EP 0 094 509 décrit à sa figure 12 un joint fileté de tubes revêtus intérieurement qui ne met pas en oeuvre d'anneau d'étanchéité mais un manchon fileté à talon lequel réunit les extrémités filetées mâles de 2 tubes, chaque surface annulaire d'extrémité de tube étant opposée à une surface annulaire du talon du manchon.

Les angles droits entre surfaces annulaires et surfaces périphériques intérieures des tubes et du talon du manchon sont cassés par un chanfrein à 45°, le revêtement intérieur étant réalisé sur les chanfreins.

De la sorte, il y a continuité du revêtement au niveau de l'ouverture en V qui réunit tube et manchon et on obtient une épaisseur de revêtement dans cette ouverture sensiblement identique à celle de la surface tubulaire intérieure des tubes et du talon du manchon.

Le joint pour tubes métalliques selon l'invention comportant les caractéristiques de la revendication 1 permet l'assemblage, protégé contre la corrosion, de deux tubes assemblés par filetages.

Ce joint comporte deux composants tubulaires munis chacun d'un filetage permettant l'assemblage, ces composants étant réalisés sur les extrémités de tubes ou tronçons de tubes à assembler.

L'assemblage des deux composants est réalisé par vissage et serrage d'au moins un composant comportant un filetage mâle dans un logement fileté femelle correspondant.

Chaque composant comporte une zone tubulaire interne qui correspond à la paroi intérieure du composant concerné à proximité de la zone de jonction. Le diamètre de cette zone tubulaire interne sera le même que le diamètre intérieur dans une partie courante du tube sur l'extrémité duquel est réalisé le composant ou sera légèrement différent de ce diamètre dans le cas où l'extrémité du tube a été préformée, par exemple par conification, avant réalisation du composant.

Cette zone tubulaire interne est prolongée au niveau de la jonction par une surface annulaire d'orientation générale radiale par rapport à la zone tubulaire interne.

Les surfaces annulaires des deux composants sont conçues pour que lors de l'assemblage du joint elles soient en contact d'appui commun sur une partie de leur surface située vers l'extérieur du composant. Ce contact d'appui commun se traduit par une génératrice commune de contact, dans un plan de coupe passant par l'axe du joint, sur une fraction de l'étendue radiale totale de ces surfaces annulaires.

Cette génératrice commune de contact est avantageusement constituée par un segment de droite qui peut être soit perpendiculaire à l'axe du joint, soit incliné par rapport à cet axe du joint. Elle peut être aussi constituée par tout segment de courbe à courbure constante ou variable.

La zone tubulaire interne de chaque composant est revêtue d'une couche destinée à protéger le métal contre la corrosion par le fluide circulant à l'intérieur des composants ou à tout autre usage tel que par exemple à diminuer les pertes de charge. Cette couche protectrice est prolongée depuis la zone tubulaire interne, pour chacun des composants, sur au moins une fraction de l'étendue radiale de la surface annulaire définie ci-dessus.

Sur la fraction de l'étendue radiale des surfaces annulaires située du côté de la zone tubulaire interne où ces surfaces ne sont pas en contact à l'état vissé, on donne à chacune des génératrices définissant chacune des surfaces annulaires, et située dans un plan de coupe passant par l'axe du joint, une forme telle que, à l'état vissé, les génératrices forment à partir d'un point initial de contact commun une ouverture progressive, la distance axiale entre les deux génératrices augmentant progressivement en allant du point initial vers l'axe du joint, les deux génératrices rejoignant la zone tubulaire interne de leur composant respectif.

Cette ouverture progressive est créée en s'écartant du prolongement géométrique naturel, vers l'intérieur du composant, de la génératrice commune de contact pour au moins une des surfaces annulaires.

La couche s'étendra avant le premier vissage sur une fraction plus ou moins importante des surfaces annulaires. Elle peut par exemple couvrir une partie des zones d'appui de chaque composant au-delà du point initial ou bien s'arrêter au voisinage du point initial.

L'ouverture peut par exemple et de façon non limitative prendre la forme d'un V, chacun des côtés de l'ouverture correspondant à une surface conique axée sur l'axe du joint.

L'ouverture est dimensionnée pour que lorsque le joint est assemblé, les surfaces annulaires étant en contact d'appui, l'ouverture soit au moins en partie remplie par les couches protectrices en contact des deux composants.

L'ouverture caractérisée par son angle d'ouverture au point initial et sa longueur seront avantageusement déterminées de façon telle que les pressions de contact entre les deux couches de revêtements diminuent progressivement du point initial à l'extrémité de l'ouverture, les couches restant en contact sur au moins une partie de la longueur de l'ouverture.

De la sorte en choisissant bien la position du point initial, d'une part on garde une génératrice commune de contact de longueur suffisante pour absorber dans de bonnes conditions les efforts de vissage et/ou de compression en service et de l'autre on répartit les pressions créées par la mise en contact des surfaces de butée dans la couche de revêtement de manière telle qu'une décompression progressive ait lieu dans l'ouverture, la couche gardant dans l'ouverture et du fait de la forme de l'ouverture une cohésion globale suffisante pour qu'aucune partie du métal ne soit mise à nu sans couche protectrice.

Très avantageusement, on dimensionnera l'ouverture pour que celle-ci se prolonge sensiblement jusqu'au point où les deux couches ne sont plus en contact l'une contre l'autre, ceci évitant de créer sur le passage du fluide circulant dans le tube un recoin ou une discontinuité en diamètre susceptible de créer des turbulences ou l'accumulation de fluide circulant.

L'angle d'ouverture qui est compris entre 5 et 30° dépendra de la longueur radiale de génératrice disponible à partir du point initial. Dans la pratique à titre d'exemple et de façon non limitative cet angle peut être par exemple de 5 à 15° et ne devrait pas être supérieur à 30° pour obtenir la décompression progressive des couches de revêtement comme expliqué ci-dessus.

Si à titre d'exemple, on donne à l'ouverture la forme d'un V, on voit que si on désigne par « L » la longueur de paroi nécessaire à la décompression des couches de revêtement, pour une couche d'épaisseur « e » et un angle total d'ouverture « X », on a L = e/sin X/2.

Si par exemple « e » = 0,1 mm et X = 10° on trouve L = 1,15 mm. On peut réaliser cette zone de fixation de la couche qui joue un rôle essentiel en augmentant la valeur ainsi trouvée de « L ». On peut partager l'angle d'ouverture entre les génératrices de la zone d'ouverture des deux composants de façon à avoir par exemple une disposition symétrique. On peut aussi ne réaliser l'angle que sur un seul composant.

Au-delà de cette zone d'ouverture, la paroi revêtue se raccorde à la zone tubulaire interne du composant correspondant.

Dans cette zone de raccordement, il est important également de réduire au minimum les contraintes dues, notamment aux variations géométriques et de température et on évitera de préférence les formes avec angles vifs. Lorsqu'il y a dans cette zone de raccordement un angle de par exemple 90° avec la génératrice de la zone tubulaire interne, on réalisera de préférence un chanfrein par exemple à environ 45° relié éventuellement par des arrondis ou des angles abattus par exemple par sablage, ou on réalisera toute autre forme générale progressive.

Les essais effectués ont montré la possibilité de réaliser ainsi des joints suivant l'invention entre deux composants revêtus sur leur zone tubulaire interne d'une couche du type epoxy qui peuvent supporter environ 10 dévissages-revissages après un premier vissage initial, sans détérioration notable et même pas de détérioration du tout de la couche de revêtement.

Il reste en particulier partout, sauf dans la zone de contact d'appui des surfaces annulaires où la couche a été usée, un film adhérent au contact du métal et suffisant pour protéger le métal, la zone de contact d'appui des surfaces annulaires étant quant à elle protégée par les couches remplissant l'ouverture.

Le joint suivant l'invention peut être réalisé, quant à sa structure de base, de plusieurs façons différentes dont nous donnons ci-dessous, sans que ceci ait un caractère limitatif, deux modes de réalisation.

Dans un premier mode de réalisation du joint, les deux composants tubulaires sont deux éléments mâles et comportent chacun un filetage extérieur au voisinage de leur extrémité.

Chacun de ces composants comporte au voisinage de son extrémité une zone tubulaire interne qui est prolongée à l'extrémité du composant par une surface annulaire frontale d'orientation générale radiale.

Chacun de ces deux composants s'engage dans un logement comportant un filetage femelle correspondant au filetage mâle du composant qui doit s'engager, les deux logements étant réalisés aux deux extrémités d'un manchon d'accouplement, manchon dont la longueur et la forme sont telles qu'elles permettent aux surfaces annulaires des deux composants de se mettre en contact d'appui sur une partie de leur surface, partie située côté diamètre extérieur desdits composants, lors de l'assemblage du joint par vissage et serrage axial.

La zone située à l'intérieur du manchon, entre les deux logements à filetage femelle permet le passage des extrémités des composants mâles du joint et peut être conçue pour assurer en plus différentes fonctions. On peut de la sorte prévoir sur cette zone interne des formes qui permettent d'assurer une étanchéité par des portées métal-métal d'étanchéité entre chaque composant du joint et le manchon, ces portées pouvant être par exemple des surfaces coniques à relativement faible conicité par exemple de l'ordre de 2° à 30° par rapport à l'axe du joint.

On peut aussi prévoir tant sur le manchon que sur le ou les composants mâles des épaulements de butée qui permettent tout en assurant le vissage-serrage du joint d'obtenir un centrage précis des deux composants dans le manchon.

Dans un deuxième mode de réalisation, le joint comporte un composant mâle avec un filetage extérieur, composant muni au voisinage de son extrémité d'une zone tubulaire interne qui est prolongée à l'extrémité dudit composant par une surface annulaire frontale d'orientation générale radiale.

L'autre composant est un composant femelle muni d'un filetage intérieur formant logement au voisinage de son extrémité. Au-delà de l'extrémité intérieure du filetage ce composant comporte une zone tubulaire interne qui est prolongée à son extrémité côté filetage par une surface annulaire d'orientation générale radiale. Le logement fileté femelle dans lequel vient se visser le composant mâle est constitué par le composant femelle lui-même, composant dont les dimensions, la forme et le filetage sont conçus pour correspondre en tout point au composant mâle et permettre lors de l'assemblage par vissage-serrage la mise en contact d'appui partiel, côté diamètre extérieur des tubes, de la surface annulaire du composant mâle avec la surface annulaire du composant femelle.

Entre la surface annulaire et le filetage de chaque composant les formes des deux composants peuvent permettre d'assurer différentes fonctionnalités comme par exemple une étanchéité par des portées métal-métal selon des principes et des modes de réalisation en soi connus.

Dans le deuxième mode de réalisation de la structure de base du joint qui vient d'être décrit, le composant femelle peut être réalisé à l'extrémité d'un tube de grande longueur. On a à faire dans ce cas à un joint dit intégral reliant directement deux tubes entre eux. Pour disposer des épaisseurs de métal voulues, il sera avantageusement prévu de réaliser préalablement selon des techniques en soi connues une expansion diamétrale du composant femelle et un rétreint diamétral du composant mâle.

En variante du deuxième mode de réalisation, le composant femelle peut être constitué par l'extrémité d'un manchon d'accouplement formant également logement pour le composant mâle, la deuxième extrémité du manchon permettant le logement d'un autre tube muni d'une extrémité avec filetage mâle, la jonction fonctionnant selon les mêmes conditions des deux cotés du manchon, les deux logements étant séparés par un talon dont la paroi intérieure constitue la zone tubulaire interne du composant femelle.

Bien entendu, dans tous les modes de réalisation de la structure de base du joint ci-dessus décrite, les zones tubulaires internes et les surfaces annulaires qui les prolongent sont revêtues d'une couche s'étendant comme cela a déjà été décrit par exemple jusqu'au voisinage du point initial.

Ces couches qui peuvent être destinées à protéger contre la corrosion ou à assurer d'autre fonctions peuvent être réalisées dans tous matériaux connus et utilisés pour le dépôt de couches minces sur des métaux pour assurer la fonction voulue et elles peuvent être déposées selon toutes les techniques connues. C'est ainsi qu'on peut utiliser de manière non limitative des couches à base de matière plastique comme par exemple un polyépoxyde, souvent appelées couches époxy. Ces couches peuvent aussi contenir pour augmenter leur résistance à l'usure des particules non métalliques telles que par exemple du verre, du carbone ou des céramiques dans un liant de matière plastique permettant leur dépôt dans de bonnes conditions.

Bien entendu une telle couche sera également déposée sur tout l'intérieur des tubes assemblés par le joint selon l'invention.

Lorsque la surface annulaire du deuxième composant est une surface qui fait partie d'un logement femelle, dans lequel est vissée l'extrémité mâle filetée du premier composant dont la surface annulaire vient en appui partiel contre cette surface on peut, de façon connue, compléter le dispositif suivant l'invention en réalisant une étanchéité métal/métal entre une surface par exemple du type tronconique convexe, située au voisinage immédiat de l'extrémité frontale du composant mâle sur sa paroi extérieure et une surface par exemple du type tronconique concave correspondante, réalisée sur la paroi du logement femelle, l'inclinaison des génératrices sensiblement parallèles de ces deux surfaces par rapport à l'axe du joint étant par exemple d'environ 2° à 30°.

Cette disposition garantit une excellente étanchéité contre les surpressions intérieures ou extérieures auxquelles est soumis le joint suivant l'invention.

La couche déposée avant le premier vissage peut recouvrir la totalité des surfaces annulaires. Cette couche dans la partie où les surfaces annulaires seront en contact d'appui aura tendance à être détériorée par la pression de contact. Ceci toutefois n'empêche pas, du fait de l'ouverture contrôlée créée entre les surfaces annulaires à l'état vissé d'assurer la cohérence de la couche protectrice sur les parties des composants soumises à la corrosion.

Les figures ci-après décrivent, de façon non limitative des exemples de réalisation du joint suivant l'invention.

La figure 1 représente de façon schématique en coupe la partie centrale d'un joint suivant l'invention dans le cas de l'assemblage par manchon de deux composants mâles aptes à venir en contact d'appui lors du vissage.

La figure 2 montre également en coupe les extrémités des deux composants mâles de la figure 1 en contact d'appui.

La figure 3 montre en coupe une variante de réalisation du joint des figures 1 et 2 au niveau des zones annulaires.

La figure 4 montre de façon schématique en coupe un joint suivant l'invention dans le cas où le composant mâle est vissé dans un logement femelle réalisé dans un manchon.

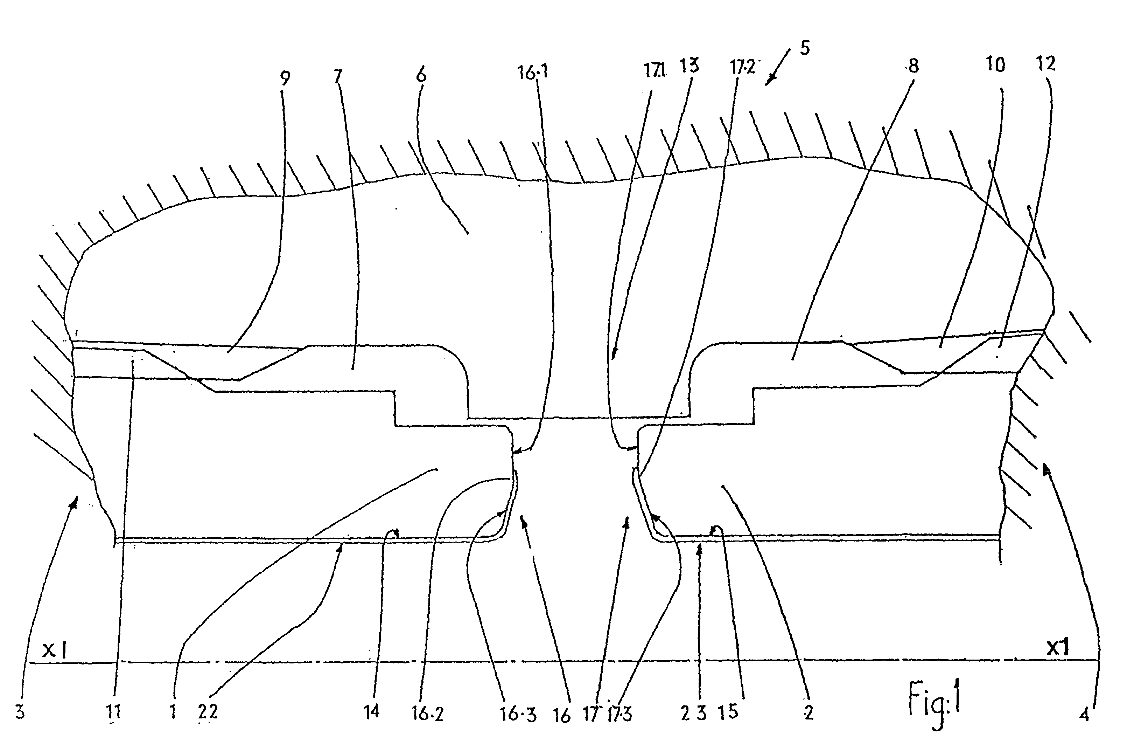

La figure 1 montre dans sa partie centrale et fortement agrandie les zones d'extrémités non filetées 1,2 des deux composants mâles 3, 4 du joint 5 représenté en coupe axiale, seule la partie de la section située au dessus de l'axe X1-X1 du joint étant représentée, ces composants 3, 4 étant réalisés sur les extrémités des tubes à assembler, tubes non représentés sur la figure.

Comme on le voit sur la figure, ces deux composant mâles 3, 4 sont assemblés par l'intermédiaire d'un manchon 6. Ce manchon possède de chaque côté un logement femelle 7, 8 dont le filetage 9, 10 correspond au filetage respectivement 11 et 12 de chacun des composants mâles 3 et 4. Le filetage non représenté en détail est ici un filetage conique dont le flanc chargé sera avantageusement un flanc à inclinaison négative.

Dans sa zone centrale 13 le manchon 6 a une forme cylindrique de révolution, qui permet aux extrémités 1, 2 également cylindriques des composants mâles de s'engager de chaque côté.

Chaque composant mâle 3, 4 comporte à son extrémité 1, 2 une zone tubulaire interne 14, 15 qui ici correspond avec la paroi intérieure du tube constituant le composant. Cette zone tubulaire interne se prolonge par une surface annulaire 16, 17 d'orientation générale radiale et disposée frontalement à chaque extrémité 1, 2. Cette surface annulaire comporte dans sa fraction située côté extérieur du composant une surface plane 16.1, 17.1 engendrée par une génératrice constituée par un segment de droite perpendiculaire à l'axe X1-X1.

La figure 2 représente le joint, de la figure 1, à l'état vissé serré.

Les surfaces 16.1, 17.1 sont alors en contact d'appui qui peut être plus ou moins étanche.

Afin de centrer parfaitement le joint, il est prévu sur le manchon de chaque côté de la partie centrale cylindrique et avant le commencement de la zone fileté un épaulement de centrage 18, 19 auquel correspond un épaulement correspondant 20, 21 sur chacun des composants mâles, ces épaulements étant conçus pour que lorsque les surfaces annulaires 16.1, 17.1 sont en appui de butée au moins un des épaulement 20, 21 des composants mâles ne soit pas en contact avec les épaulements 18, 19 correspondants du manchon 6. Ici seuls les épaulements de centrage 19, 21 sont en appui.

Les surfaces annulaires 16, 17 présentent à partir du point 16.2, 17.2 une inclinaison par rapport au prolongement géométrique naturel de la génératrice de la surface d'appui 16.1, 17.1, avant d'aller rejoindre leur zone tubulaire interne 14, 15 respective. Ainsi les surfaces 16.3, 17.3 ont ici une forme générale conique d'axe X1-X1 prolongée par un arrondi 16.4, 17.4.

Les génératrices des surfaces 16.3, 17.3 font avec le plan commun perpendiculaire à l'axe X1-X1 un angle α1 et α2, α1 étant ici égal à α2.

Une couche d'epoxy 22, 23 est déposée avant le premier vissage sur la surface intérieure de chaque composant mâle 3, 4 et la recouvre de façon soignée pour la protéger contre la corrosion. Cette couche s'étend sur la zone tubulaire interne 14, 15 et s'étend au-delà du point 16.2, 17.2 défini précédemment sur une partie des surfaces d'appui de butée 16.1, 17.1.

Bien entendu sur la figure, la couche n'est pas représentée à l'échelle pour mieux faire ressortir la description sur ce point.

Sur la figure 2 on voit que la zone d'ouverture progressive 24 formée par les surfaces coniques 16.3, 17.3 lors du vissage serrage du joint est remplie au moins partiellement par les couches protectrices 22, 23 qui se trouvent écrasées l'une contre l'autre dans la partie haute du V d'ouverture avant de retrouver leur structure d'origine dans la partie basse du V.

La couche 22, 23 a également été écrasée dans la zone d'appui de butée 16.1, 17.1 et chassée en partie dans l'ouverture du V.

A titre d'exemple la couche peut avoir une épaisseur dans sa partie courante de l'ordre de 0,15 mm.

Si on donne à l'angle α1 et α2 une valeur de 10°, l'angle total d'ouverture X4 à partir du point initial 16.2, 17.2 est alors de 20°.

Ceci donne pour L, longueur sur laquelle les couches des deux composants seront en contact ou compression et rempliront l'ouverture 24 une valeur minimum de 0,15 mm (épaisseur)/0,174 (sin 10) soit 0,86 mm.

En fait une partie de la couche protectrice ayant été comprimée dans l'ouverture 24 la valeur de L sera en pratique supérieure à 0,86 mm et peut atteindre par exemple 1 mm.

On peut ainsi donner à l'épaisseur H1 entre la zone tubulaire interne 14, 15 et le point 16.2, 17.2 d'inflexion de la surface 16, 17 une valeur de l'ordre de 1,5 mm ce qui permet d'assurer un raccordement aux zones 14, 15 dans de bonnes conditions et de garder en pratique une épaisseur H2 pour la surface d'appui de butée 16.1, 17.1 suffisante pour assurer un fonctionnement satisfaisant du joint sans plastification au vissage des surfaces d'appui.

On constate qu'une telle structure de joint peut être vissée et dévissée un certain nombre de fois tout en assurant dans de bonnes conditions la protection contre la corrosion.

La couche protectrice 22, 23 déposée avant le premier vissage peut ne pas recouvrir la totalité des surfaces coniques 16.3, 17.3 ou s'étendre au-delà des points 16.2, 17.2 comme décrit ci-dessus. L'important est que les couches 22, 23 soient mises en contact de préférence en compression dans la zone d'ouverture 24 lors du vissage de façon à ce que le métal ne soit pas à nu et soumis à la corrosion par le fluide circulant.

On évitera bien sûr les surfaces anguleuses au raccordement des surfaces coniques 16.3, 17.3 avec les zones tubulaires internes 14, 15, ces surfaces anguleuses pouvant entraîner la rupture de la couche 22, 23. Un arrondi tel que représenté sur les figures 1 ou 2 en 16.4, 17.4 ou un chanfrein tel que 44, 45 dont les angles de raccordement ont été amortis par sablage tel que représenté sur la figure 4 pourront être par exemple utilisés.

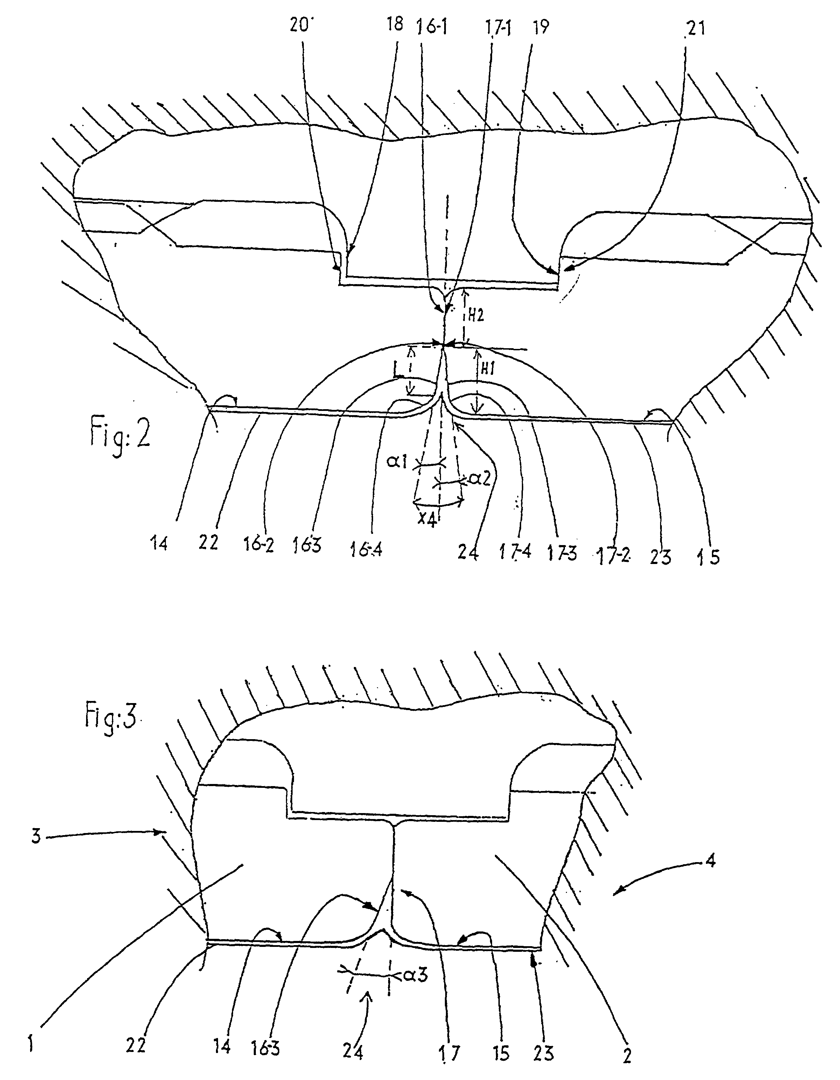

La figure 3 représente une variante des figures 1 et 2.

Le joint représenté dans sa partie centrale sur cette figure 3 a la même structure de base que le joint de la figure 1 mais la zone d'ouverture progressive 24 est ici non symétrique.

Au lieu de répartir l'ouverture en V sur les deux extrémités des composants mâles 1, 2 on a réalisé cette ouverture uniquement sur une seule extrémité ici 1 en donnant à la surface 16.3 correspondante un angle α3 avec le plan perpendiculaire à l'axe X1-X1, angle dont la valeur est sensiblement égale à α1 + α2.

La surface 17 annulaire de l'extrémité 2 est dans ce cas plane et perpendiculaire à l'axe X1-X1. Bien entendu on veillera à contrôler les zones de raccordement des surfaces annulaires 16 et 17 avec les zones tubulaires internes 14, 15 pour éviter les angles vifs.

Une telle réalisation selon la figure 3 a l'avantage de simplifier la fabrication pour un des composants du joint, ici le composant 4 qui n'est pas modifié par rapport à sa forme habituelle.

Une telle disposition est particulièrement intéressante lorsque la pente de la surface annulaire dans la zone 16.1 de contact d'appui est conique et présente un angle tel que celui représenté à la figure 4 pour le composant mâle.

La figure 4 décrit de façon très agrandie un exemple de réalisation d'un joint 30 à l'état assemblé comportant un composant mâle 31 vissé dans un logement femelle 32 constitué par le composant femelle 33, le filetage mâle 34 et le filetage femelle 35 se correspondant, seule la partie représentant l'assemblage des deux composants étant représentée en coupe pour la partie au dessus de l'axe X2-X2 du joint.

La structure de base du joint 30 correspond par exemple à un joint tel que décrit dans le brevet européen 0488 912 B2, cette précision n'étant nullement limitative.

Cette figure 4 peut s'appliquer au cas où le composant femelle 33 représente avec son logement 32 un côté d'un manchon à talon dont seul un côté est représenté, l'autre côté non représenté étant à droite de la figure. Elle peut s'appliquer aussi au cas où le joint est du type intégral le composant 33 étant dans ce cas le composant femelle réalisé à l'extrémité d'un tube généralement de grande longueur non représenté et situé à la droite de la figure.

Comme le montre cette figure 4 schématiquement on retrouve ici les surfaces annulaires 36, 37 prolongeant les zones tubulaires internes 38, 39 une couche protectrice 40, 41 étant déposée comme cela a été décrit aux figures 1 à 3.

L'extrémité du composant mâle 31 comporte une surface mâle d'appui 36.1 serrée par vissage contre une surface femelle d'appui correspondante 37.1 du logement femelle 32 d'un manchon d'assemblage ou d'un logement de l'extrémité femelle d'un tronçon de tube. Ces deux surfaces d'appui ont une génératrice de contact X3-X3 inclinée d'environ 5° à 35° par rapport à un plan perpendiculaire à l'axe du joint. La zone d'ouverture 42 comporte un angle d'ouverture total α4 d'environ 10° et l'épaisseur de la couche protectrice 40, 41 est telle que à l'état vissé l'ouverture du V est en majeure partie remplie jusqu'au point référencé 43 par les couches en partie comprimées. Dans ces conditions la valeur de H3 est par exemple de l'ordre de 2,5 mm compte tenu de l'épaisseur nécessaire pour assurer le raccordement aux zones 38, 39. Comme dans le cas des exemples précédents, le congé de raccordement des surfaces annulaires 36, 37 avec les zones tubulaires internes 38, 39 est réalisé au moyen de courbes ayant des rayons suffisants ou comme représenté avantageusement de chanfreins à environ 45°.

Dans ces conditions on constate une excellente adhérence de la couche protectrice même après plusieurs vissages-dévissages. On constate en particulier que, dans la zone d'ouverture 42, il se maintient une couche adhérente au métal, même au voisinage des surfaces de contact d'appui 36.1, 37.1, malgré l'expulsion d'une partie de cette couche soumise à l'action d'écrasement réalisé par les parois métalliques de la zone d'ouverture.

On voit que dans ces différents exemples de réalisation du joint suivant l'invention, la combinaison de base d'une couche protectrice avec une zone d'ouverture progressive adjacente à une zone de contact d'appui empêche le passage de fluides corrosifs en direction du métal sous-adjacent et maintient l'intégrité de la couche protectrice.

De nombreuses variantes peuvent être faites par rapport aux exemples donnés et à la description qui restent dans le domaine protégé de l'invention. En particulier on peut utiliser tous types de filetage connus dans la réalisation des joints filetés, tel que par exemple des filetages simples, à étage, coniques ou cylindriques.

## Revendications

1. Joint (5) fileté pour tubes comportant deux composants tubulaires (3, 4, 31, 33), au moins un des deux composants tubulaires étant un composant mâle (3), chaque composant étant muni d'un filetage (11, 12, 34, 35) et comportant une zone tubulaire interne (14, 15, 38, 39) prolongée par une surface annulaire (16, 17, 36, 37), une couche (22, 23, 40, 41) revêtant la zone tubulaire interne (14, 15, 38, 39) de chaque composant (3, 4, 31, 33) et au moins une fraction de l'étendue radiale de la surface annulaire (16, 17, 36, 37), l'assemblage des deux composants étant réalisé par vissage, soit, lorsque le second composant est un composant femelle (33), du composant mâle (31) dans un logement fileté femelle (32) appartenant au second composant, soit, lorsque le second composant est un composant mâle (4), de chaque composant mâle (3, 4), dans un logement fileté femelle (7, 8) disposé à chaque extrémité d'un manchon d'accouplement (6), les deux surfaces annulaires (16, 17, 36, 37), étant à l'état vissé en contact d'appui selon une génératrice commune sur une partie (16.1, 17.1, 36.1, 37.1) extérieure de leur surface, les génératrices des surfaces annulaires (16.3, 17.3) formant, vers l'intérieur du joint, à partir d'un point initial (16.2, 17.2) une ouverture progressive (24) puis rejoignant la zone tubulaire interne (14, 15) de leur composant (3, 4) respectif, l'ouverture (24) étant au moins en partie remplie par les couches protectrices (22, 23, 40, 41) en contact des deux composants **caractérisé en ce que** l'ouverture forme un angle (X) au point initial (16.2, 17.2) compris entre 5 et 30° de manière à réaliser une décompression progressive des couches protectrices (22, 23, 40, 41).

2. Joint suivant la revendication 1 **caractérisé en ce que** dans la zone d'ouverture (24) la distance axiale entre les deux génératrices (16.3, 17.3) augmente progressivement à partir du point initial (16.2, 17.2), la génératrice (16.3) d'au moins un composant s'écartant du prolongement géométrique naturel de la génératrice commune (16.1, 17.1).

3. Joint suivant l'une des revendications 1 ou 2 **caractérisé en ce que** la couche protectrice (22, 23) couvre avant le premier vissage une partie des zones de contact d'appui (16.1, 17.1) de chaque composant au-delà du point initial (16.2, 17.2).

4. Joint suivant l'une des revendications 1 ou 2 **caractérisé en ce que** la couche protectrice (22, 23) couvre avant le premier vissage une zone s'arrêtant au voisinage du point initial (16.2, 17.2).

5. Joint suivant l'une des revendications 1 à 4 **caractérisé en ce que** l'ouverture (24) a la forme d'un V, l'angle d'ouverture (X) étant partagé de façon égale (α 1, α 2) ou non égale (α 3) entre les génératrices (16.3, 17.3) des deux composants.

6. Joint suivant l'une des revendications 1 à 5 **caractérisé en ce que** la couche protectrice (22, 23) est une couche plastique à base d'un polyépoxyde.

7. Joint suivant l'une des revendications 1 à 6 **caractérisé en ce que** ses deux composants sont des composants mâles, munis de filetages extérieurs, qui s'engagent dans les logements munis de filetages femelles correspondant aux filetages extérieurs, logements réalisés aux deux extrémités d'un manchon d'accouplement permettant à l'état vissé la mise en contact d'appui des surfaces annulaires (16, 17) sur une partie (16.1, 17.1) de leur surface.

8. Joint suivant l'une des revendications 1 à 6 **caractérisé en ce que** il comporte un composant mâle muni d'un filetage extérieur et un composant femelle muni d'un filetage intérieur correspondant au filetage extérieur le composant femelle servant de logement d'assemblage, les surfaces annulaires (36, 37) venant en contact d'appui sur une partie (36.1, 37.1) de leur surface à l'intérieur du composant femelle (33).

9. Joint suivant la revendication 8 **caractérisé en ce que** le joint est un joint intégral, le composant femelle étant réalisé en extrémité d'un tube de longueur courante.

10. Joint suivant la revendication 8 **caractérisé en ce que** le composant femelle formant logement est réalisé sur une extrémité d'un manchon d'accouplement dont la deuxième extrémité munie d'un logement identique au logement de la première extrémité permet l'assemblage d'un autre tube muni à son extrémité d'un composant identique au composant mâle, les deux logements étant séparés par un talon dont la paroi intérieure constitue la zone tubulaire interne.

11. Joint suivant l'une des revendications 7 à 10 **caractérisé en ce qu'**il comporte au moins une portée d'étanchéité métal-métal entre composant mâle et logement femelle.

12. Joint suivant l'une des revendications 1 à 11 **caractérisé en ce que** la zone d'ouverture (24, 42) se raccorde à la zone tubulaire interne (14, 15 - 38, 39) de chaque composant par un chanfrein ou un arrondi.

13. Joint suivant l'une des revendications 1 à 12 **caractérisé en ce que** la couche (22, 23) est une couche destinée à protéger le joint contre la corrosion.

14. Joint suivant l'une des revendication 1 à 12 **caractérisé en ce que** la couche (22, 23) est une couche destinée à réduire les pertes de charge du fluide en circulation.

## Patentansprüche

1. Gewindeverbindung (5) für Rohre mit zwei rohrförmigen Bauteilen (3, 4, 31, 33), wobei mindestens eines der beiden rohrförmigen Bauteile ein Einsetzbauteil (3) ist, wobei jedes Bauteil mit einem Gewinde (11, 12, 34, 35) versehen ist und eine innere rohrförmige Zone (14, 15, 38, 39) aufweist, die durch eine ringförmige Fläche (16, 17, 36, 37) verlängert wird, wobei eine Schicht (22, 23, 40, 41) die innere rohrförmige Zone (14, 15, 38, 39) jedes Bauteils (3, 4, 31, 33) und mindestens einen Teil der radialen Ausdehnung der ringförmigen Fläche (16, 17, 36, 37) bedeckt, wobei die Zusammenfügung der beiden Bauteile, wenn das zweite Bauteil ein Aufnahmebauteil (33) ist, durch Einschrauben des Einsetzbauteils (31) in einen zum zweiten Bauteil gehörenden, mit Gewinde versehenen Aufnahmesitz (32) erfolgt, oder, wenn das zweite Bauteil ein Einsteckbauteil (4) ist, durch Einschrauben jedes Einsetzbauteils (3, 4) in einen mit Gewinde versehenen Aufnahmesitz (7, 8) erfolgt, der an jedem Ende einer Kupplungsmuffe (6) angeordnet ist, wobei die beiden ringförmigen Flächen (16, 17, 36, 37) im zusammengeschraubten Zustand entlang einer gemeinsamen Mantellinie auf einem Außenbereich (16.1, 17.1, 36.1, 37.1) ihrer Fläche in Auflagekontakt sind, wobei die Mantellinien (16.3, 17.3) der ringförmigen Flächen zur Innenseite der Verbindung hin ausgehend von einem Anfangspunkt (16.2, 17.2) eine progressive Öffnung (24) bilden und dann an die ringförmige Innenzone (14, 15) ihres jeweiligen Bauteils (3, 4) anschließen, wobei die Öffnung (24) zumindest teilweise von den miteinander in Kontakt stehenden Schutzschichten (22, 23, 40, 41) der beiden Bauteile ausgefüllt wird, **dadurch gekennzeichnet, daß** die Öffnung am Anfangspunkt (16.2, 17.2) einen Winkel (X) zwischen 5 und 30° bildet, um eine progressive Dekompression der Schutzschichten (22, 23, 40, 41) zu erzeugen.

2. Rohrverbindung nach Anspruch 1, **dadurch gekennzeichnet, daß** in der Öffnungszone (24) der axiale Abstand zwischen den beiden Mantellinien (16.3, 17.3) sich ausgehend vom Anfangspunkt (16.2, 17.2) progressiv vergrößert, wobei die Mantellinie (16.3) mindestens eines Bauteils sich von der natürlichen geometrischen Verlängerung der gemeinsamen Mantellinie (16.1, 17.1) entfernt.

3. Rohrverbindung nach einem der Ansprüche 1 oder 2, **dadurch gekennzeichnet, daß** die Schutzschicht (22, 23) vor dem ersten Schraubvorgang einen Bereich der Auflagekontaktzonen (16.1, 17.1) jedes Bauteils jenseits des Anfangspunkts (16.2, 17.2) bedeckt.

4. Rohrverbindung nach einem der Ansprüche 1 oder 2, **dadurch gekennzeichnet, daß** die Schutzschicht (22, 23) vor dem ersten Schraubvorgang eine Zone bedeckt, die in der Nähe des Anfangspunkts (16.2; 17.2) endet.

5. Rohrverbindung nach einem der Ansprüche 1 bis 4, **dadurch gekennzeichnet, daß** die Öffnung (24) die Form eines V hat, wobei der Öffnungswinkel (X) gleichmäßig (α1, α2) oder ungleichmäßig (α3) zwischen den Mantellinien (16.3, 17.3) der beiden Bauteile verteilt ist.

6. Rohrverbindung nach einem der Ansprüche 1 bis 5, **dadurch gekennzeichnet, daß** die Schutzschicht (22, 23) eine Kunststoffschicht auf der Basis eines Polyepoxids ist.

7. Rohrverbindung nach einem der Ansprüche 1 bis 6, **dadurch gekennzeichnet, daß** ihre beiden Bauteile Einsetzbauteile sind, die mit Außengewinden versehen sind, welche sich in Sitze einfügen, deren Innengewinde den Außengewinden entsprechen, Sitze die an den beiden Enden einer Kupplungsmuffe ausgebildet sind, die in geschraubtem Zustand den Auflagekontakt der ringförmigen Flächen (16, 17) über einen Teil (16.1, 17.1) ihrer Fläche ermöglicht.

8. Rohrverbindung nach einem der Ansprüche 1 bis 6, **dadurch gekennzeichnet, daß** sie ein Einsetzbauteil mit einem Außengewinde und ein Aufnahmebauteil mit einem dem Außengewinde entsprechenden Innengewinde aufweist, wobei das Aufnahmebauteil als Sitz für den Zusammenbau dient, wobei die ringförmigen Flächen (36, 37) innerhalb des Aufnahmebauteils (33) über einen Teil (36.1, 37.1) ihrer Fläche in Auflagekontakt gelangen.

9. Rohrverbindung nach Anspruch 8, **dadurch gekennzeichnet, daß** die Rohrverbindung eine Integralverbindung ist, wobei das Aufnahmebauteil am Ende eines Rohrs üblicher Länge ausgebildet ist.

10. Rohrverbindung nach Anspruch 8, **dadurch gekennzeichnet, daß** das einen Sitz bildende Aufnahmebauteil an einem Ende einer Kupplungsmuffe ausgebildet ist, deren mit einem Sitz gleich dem Sitz am ersten Ende versehenes zweites Ende die Anfügung eines anderen Rohrs ermöglicht, das an seinem Ende mit einem Bauteil gleich dem Einsetzbauteil versehen ist, wobei die beiden Sitze durch einen Absatz getrennt sind, dessen Innenwand die innere rohrförmige Zone bildet.

11. Rohrverbindung nach einem der Ansprüche 7 bis 10, **dadurch gekennzeichnet, daß** sie mindestens eine abdichtende Metall-Metall-Lagerfläche zwischen Einsetzbauteil und Aufnahmesitz aufweist.

12. Rohrverbindung nach einem der Ansprüche 1 bis 11, **dadurch gekennzeichnet, daß** die Öffnungszone (24, 42) an die innere ringförmige Zone (14, 15 - 38, 39) jedes Bauteils durch eine Schräge oder eine Abrundung anschließt.

13. Rohrverbindung nach einem der Ansprüche 1 bis 12, **dadurch gekennzeichnet, daß** die Schicht (22, 23) eine Schicht ist, die die Rohrverbindung vor Korrosion schützen soll.

14. Rohrverbindung nach einem der Ansprüche 1 bis 12, **dadurch gekennzeichnet, daß** die Schicht (22, 23) eine Schicht ist, die die Druckverluste des zirkulierenden Fluids verringern soll.

## Claims

1. A threaded joint (5) for tubes comprising two tubular components (3, 4, 31, 33), at least one of the two tubular components being a male component (3), each component being equipped with a thread 1, 12, 34, 35) and comprising a tubular internal zone (14, 15, 38, 39) which is prolonged by an annular surface (16, 17, 36, 37), a layer (22, 23, 40, 41) covering the tubular internal zone (14, 15, 38, 39) of each component (3, 4, 31, 33) and at least a fraction of the radial extent of the annular surface (16, 17, 36, 37), assembly of the two components being effected by screwing either, when the second component is a female component (33), the male component (31) into a female threaded housing (32) belonging to the second component, or, when the second component is a male component (4), each male component (3, 4) into a female threaded housing (7, 8) disposed at either end of a coupling sleeve (6), the two annular surfaces (16, 17, 36, 37) in the screwed state being in abutment contact along a common generatrix over an external part (16.1, 17.1, 36.1, 37.1) of their surface, the generatrices of the annular surfaces (16.3, 17.3) forming towards the interior of the joint, from an initial point (16.2, 17.2) a progressive opening (24) and then rejoining the tubular internal zone (14, 15) of their respective component (3, 4), the opening (24) being at least partially filled by the protective layers (22, 23, 40, 41) of the two components, said protective layers being in contact **characterised in that** at the initial point (16.2, 17.2) the opening forms an angle (X) of between 5 and 30° so as to provide gradual decompression of the protective layers (22, 23, 40, 41).

2. A joint according to Claim 1, **characterised in that** in the opening zone (24) the axial distance between the two generatrices (16.3, 17.3) increases progressively from the initial point (16.2, 17.2), the generatrix (16.3) of at least one component departing from the natural geometrical prolongation of the common generatrix (16.1, 17.1).

3. A joint according to one of Claims 1 and 2, **characterised in that** the protective layer (22, 23), prior to first screwing, covers a part of the abutment contact zones (16.1, 17.1) of each component beyond the initial point (16.2, 17.2).

4. A joint according to one of Claims 1 and 2, **characterised in that** the protective layer (22, 23), prior to the first screwing, covers a zone which stops in the vicinity of the initial point (16.2, 17.2).

5. A joint according to one of Claims 1 to 4, **characterised in that** the opening (24) is V-shaped, the opening angle (X) being divided equally (α 1, α 2) or unequally (α 3) between the generatrices (16.3, 17.3) of the two components.

6. A joint according to one of Claims 1 to 5, **characterised in that** the protective layer (22, 23) is a plastic layer based on a polyepoxide.

7. A joint according to one of Claims 1 to 6, **characterised in that** its two components are male components which are provided with external threads and which engage into the housings provided with female threads corresponding to the external threads and provided at the two ends of a coupling sleeve permitting in the screwed state abutment contact of the annular surfaces (16, 17) over a part (16.1, 17.1) of their surface.

8. A joint according to one of Claims 1 to 6, **characterised in that** it comprises a male component provided with an external thread and a female component provided with an internal thread corresponding to the external thread, the female component serving as an assembly housing, the annular surfaces (36, 37) coming into abutment contact over a part (36.1, 37.1) of their surface in the interior of the female component (33).

9. A joint according to Claim 8, **characterised in that** the joint is an integral joint, the female component being provided at the end of a tube of usual length.

10. A joint according to Claim 8, **characterised in that** the female component forming the housing is provided on an end of a coupling sleeve of which the second end which is provided with a housing identical to the housing of the first end permits assembly of another tube provided at its end with a component identical to the male component, the two housings being separated by a flange portion of which the internal wall constitutes the tubular internal zone.

11. A joint according to one of Claims 7 to 10, **characterised in that** it comprises at least one metal-metal sealing surface between a male component and female housing.

12. A joint according to one of Claims 1 to 11, **characterised in that** the opening zone (24, 42) is connected to the tubular internal zone (14, 15 - 38, 39) of each component by a chamfer or a rounded portion.

13. A joint according to one of Claims 1 to 12, **characterised in that** the layer (22, 23) is a layer which is intended to protect the joint from corrosion.

14. A joint according to one of Claims 1 to 12, **characterised in that** the layer (22, 23) is a layer which is intended to reduce the pressure drops in the flowing liquid.
